# FASCICULE DE BREVET EUROPEEN

(11) **EP 1 238 329 B1**
(45) Date de publication et mention de la délivrance du brevet: **25.05.2005**
(21) Numéro de dépôt: 00985424.1
(22) Date de dépôt: 13.12.2000
(51) Int. Cl.: G06F 3/147

(54) **SYSTEME D'ETIQUETTES ELECTRONIQUES POUR L'AFFICHAGE DE PRIX SUR LE LIEU DE VENTE**
SYSTEM VON ELEKTRONISCHEN ETIKETTEN ZUR ANZEIGE VON PREISEN AM VERKAUFSORT
ELECTRONIC LABEL SYSTEM FOR DISPLAYING PRICES IN A SALE OUTLET

(30) Priorité: 15.12.1999 FR 9915813
(43) Date de publication de la demande: 11.09.2002
(73) Titulaire: STORE ELECTRONIC SYSTEMS ELECTRONIC SHELF LABEL, 95870 Bezons (FR)
(72) Inventeur: BERRUBE, François, F-92400 Courbevoie (FR); LEGRAS, Pierre, F-67200 Strasbourg (FR)
(74) Mandataire: Le Forestier, Eric
(86) Numéro de dépôt international: PCT/FR2000/003504
(87) Numéro de publication internationale: WO 2001/044919

(56) Documents cités:
- EP-A- 0 604 382
- EP-A- 0 837 411
- WO-A-99/26221

## Description

La présente invention concerne d'une façon générale les systèmes d'affichage de prix commandés à distance dans les magasins.

De tels systèmes ont pour objet essentiel de permettre, au niveau des rayonnages d'un site tel qu'un supermarché, hypermarché ou toute autre surface de vente (par exemple pharmacies, etc.), de présenter aux consommateurs, pour chaque article à la vente, un prix dont on sait qu'il correspond de façon fiable au prix tel qu'il figure dans le fichier central du magasin, c'est-à-dire au prix tel qu'il sera effectivement utilisé en caisse pour le paiement de l'article.

Un autre objet de ces systèmes connus est de permettre de réaliser des changements de prix automatisés dans des délais beaucoup plus courts qu'avec un affichage manuel, que ce soit pour des périodes particulières de promotion dans le magasin, pour tout ou partie des articles, pour répercuter des changements de tarifs, pour faire face à des situations d'inflation où les prix doivent être augmentés très fréquemment, etc.

Par ailleurs, il existe en matière d'affichage de prix de nombreuses contraintes, notamment légales, quant à la nature des prix affichés (prix unitaire, prix promotionnel, prix en Euro, etc:), qui doivent être respectés par les systèmes électroniques de la même manière que par les affichages papier.

Ainsi les systèmes d'étiquettes électroniques, bien qu'ils tendent à devenir de plus en plus sophistiqués au fil du temps, restent toutefois relativement rigides quant aux différentes possibilités d'affichage, et quant à l'organisation temporelle de ces différentes possibilités.

Par exemple, le document EP 0 837 411 A décrit un système d'étiquettes électroniques dans lequel un prix est calculé par pression sur un bouton, en associant (multipliant) le contenu d'un certain registre de prix avec le contenu d'un certain registre de coefficient, de façon entièrement figée.

La présente invention vise à pallier ces inconvénients de l'état de la technique et à proposer un système d'étiquettes électroniques qui offre de vastes possibilités d'affichage, notamment pour faire face aux contraintes décrites plus haut et à une demande croissante de la part des utilisateurs de modifier souvent, et pour de brèves périodes, les prix à afficher, qui permette d'afficher de façon extrêmement souple et rapide des informations autres que des prix, par exemple des informations liées aux produits et/ou aux étiquettes elles-mêmes, et qui offre également la possibilité de modifier l'ensemble des étiquettes d'un groupe donné, ou de l'ensemble du magasin, selon des échéances précises et bien déterminées quant à leur instant de début et/ou à leur durée.

A cet effet, l'invention propose un système d'étiquettes électroniques tel que défini dans la revendication 1.
Des aspects préférés mais non limitatifs de ce système sont définis dans les revendications dépendantes.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est un schéma synoptique de certaines fonctionnalités d'une étiquette électronique d'affichage de prix selon l'invention ;
la figure 2 est une vue de face d'un exemple préféré d'afficheur à cristaux liquides utilisé dans une étiquette électronique de l'invention,
la figure 3 est une liste de commandes utilisées dans des messages destinés aux étiquettes électroniques, et
la figure 4 illustre un codage numérique particulier d'un afficheur à sept segments.

On notera préliminairement que, dans la description qui suit, on utilisera indifféremment le terme « registre », « mémoire » ou encore « zone de mémoire » pour désigner les emplacements, dans une étiquette électronique, d'informations variables, que ce soient des données, des paramètres, des commandes, etc. Par ailleurs, le terme « digit » sera en général compris comme une quartet (suite de quatre bits), ceci n'étant bien entendu nullement limitatif.

### Architecture générale

### Structure d'ensemble

On notera tout d'abord que les étiquettes électroniques du système selon l'invention présente une architecture générale comportant principalement :
- un pilotage par micro-contrôleur, en association avec un système d'exploitation contenu dans une mémoire morte et avec des circuits intégrés spécifiques ; appropriés
- un jeu de mémoires ou registres pour des variables (prix, adresse d'étiquette, différents drapeaux, etc.) ;
- un circuit de réception de signaux transmis par une station centrale ou une unité portable, en association avec une antenne de réception (cas d'une transmission radio) ou d'un élément photosensible (cas d'une transmission infrarouge), par exemple ;
- un circuit de commande d'affichage notamment à partir du contenu des mémoires ;
- une pile pour l'alimentation des différents circuits ;
- un boîtier.

Pour plus de détails sur une telle étiquette, et en particulier sur ses modalités de communication avec une station centrale et des terminaux portables, on pourra se référer par exemple au document FR 2 658 645 A au nom de la Demanderesse.

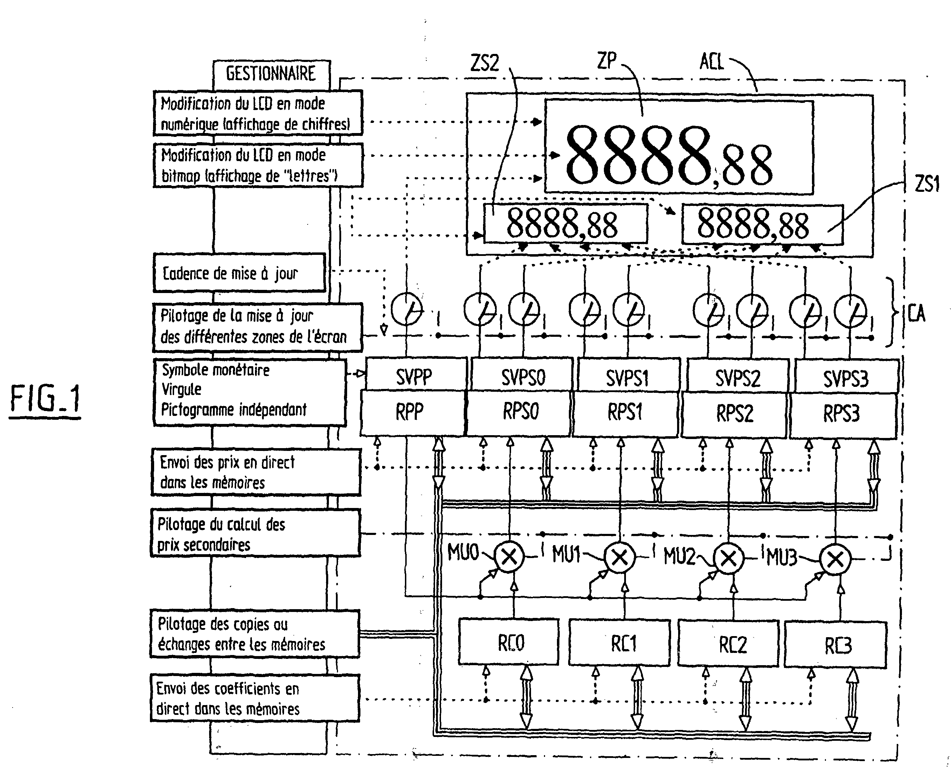

En référence à la figure 1, on a représenté une partie de l'architecture d'une étiquette électronique, qui comprend un afficheur à cristaux liquides ACL possédant une zone principale d'affichage de prix ZP et deux zones secondaires d'affichage de prix, ZS1 et ZS2, ici plus petites que la zone principale.

L'étiquette possède cinq registres de prix, à savoir un registre de prix principal RPP et quatre registres de prix secondaires RPS1, RPS2, RPS3 et RPS4.

En association avec chacun des quatre registres de prix secondaire sont prévus quatre registres de coefficients, désignés par RC1, RC2, RC3 et RC4.

Par ailleurs, l'étiquette est apte à piloter des opérations de multiplication entre le contenu du registre de prix principal RPP et les registres de coefficients RC1 à RC4, à l'aide de quatre multiplicateurs MU0 à MU3 (en pratique implémentés dans le programme d'exploitation du micro-contrôleur).

L'étiquette est en outre capable de commander l'affectation entre les différentes registres de prix et les trois zones d'affichage, à l'aide de commandes d'affichage CA représentés sur la figure 1 sous forme symbolique d'interrupteurs. On observera ici que la mémoire de prix principal RPP ne peut être affectée qu'à la zone principale ZP de l'afficheur, tandis que chaque mémoire de prix secondaire RPS0 à RPS3 peut être affectée indifféremment à l'une ou l'autre des deux zones secondaires ZS1 et ZS2 de l'afficheur.

On observe également sur la figure 1 que les données de prix figurant dans les registres sont associés à des données de position de virgule, de symbole monétaire et de pictogrammes qui sont stockées séparément dans des zones respectives SVPP et SVPS0 à SVPS3, à des fins expliquées plus loin.

La partie gauche de la figure 1 illustre schématiquement un certain nombre d'actions sur l'étiquette, déclenchées par des messages issus de la station centrale, et des lignes en pointillés ou en tiretés désignent les actions correspondantes dans le synoptique illustré en partie droite.

### Afficheur

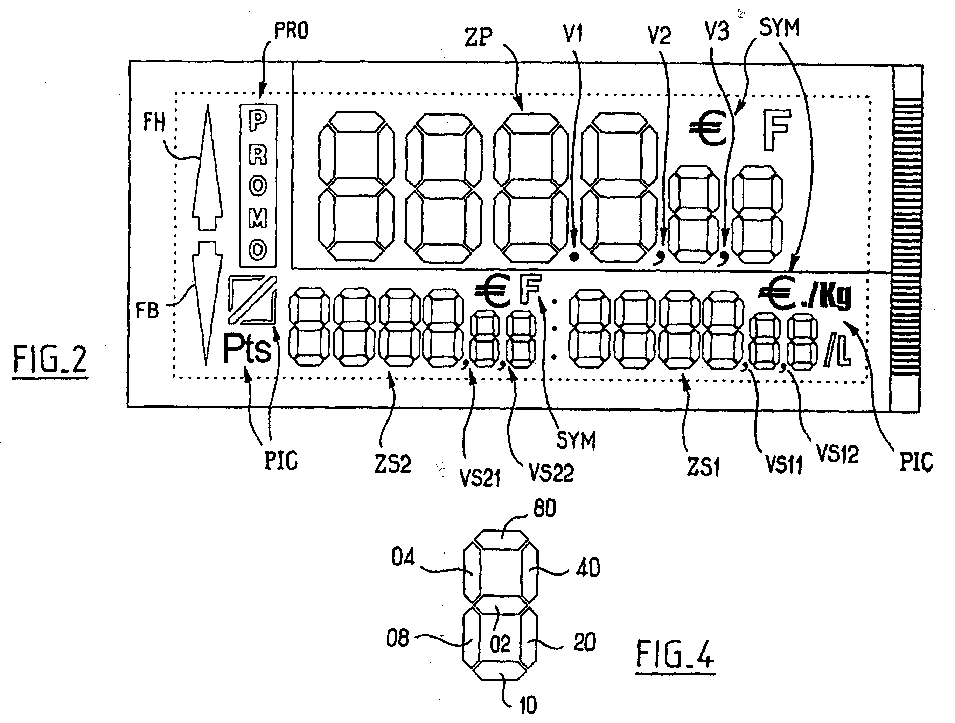

La figure 2 illustre plus en détail l'organisation de l'afficheur à cristaux liquides ACL, avec :
- la zone de prix principal ZP, offrant deux possibilités de positions de virgule V1 et V2,
- les deux zones de prix secondaires ZS1 et ZS2, offrant deux possibilités de positions de virgule respectivement VS11, VS12 et VS21, VS22 ;
- des flèches FH et FB respectivement vers le haut et vers le bas, pour indiquer où se trouve le produit en vente correspondant à l'étiquette ;
- des symboles monétaires SYM ;
- des pictogrammes PIC ;
- un pavé de promotion PRO, signalant que l'article est actuellement à un prix promotionnel.

Comme on va le voir en détail dans la suite, l'afficheur peut afficher soit des données de prix et autres informations fournies par les différents registres de l'étiquette, soit des données semi-graphiques quelconques provenant d'une station centrale, selon un mode de carte de bits ou analogue.

### Réveil d'une étiquette

Le réveil d'une étiquette s'effectue selon le protocole suivant : après bonne réception d'une commande normale de réveil, l'étiquette arme une temporisation d'environ 36 secondes. A l'échéance de cette temporisation, l'étiquette teste en « champ faible » la présence d'une émission radio. Puis toutes les 37 secondes environ, ce test est à nouveau effectué.

On prévoit également une commande spéciale d'enchaînement de commandes, grâce à laquelle un test de réception en champ faible est effectué beaucoup plus rapidement, et typiquement moins d'une seconde après le traitement de la commande. Ceci permet d'enchaîner certaines commandes (voir plus loin la description des commandes) et « d'économiser » la durée de 72 secondes nécessaire à la synchronisation lors de commandes additionnelles. Cette commande spéciale n'est bien entendu exploitable que lors de l'adressage individuel d'une étiquette ou de l'ensemble du parc en une seul commande.

Par ailleurs, cette fonctionnalité d'enchaînement de commandes est valide uniquement pour certaines des commandes décrites plus loin et notamment :
- une commande B de positionnement de drapeau ;
- une commande E de changement d'adresse d'étiquette ;
et en outre, dans le cas où la fonction d'affichage automatique à réception (voir plus loin) est désactivée. pour les commandes suivantes :
- une commande 2 de transmission de coefficients et de prix ;
- une commande 4 de transmission du prix principal ;
- une commande 5 de transmission d'un prix secondaire ;
- une commande A de transmission de prix et de coefficients ;
- une commande D de permutation ou de copie de mémoire à mémoire.

### Description détaillée du système

On va maintenant décrire plus en détail d'une part l'organisation des différentes informations dans l'étiquette, et d'autre part les différentes commandes susceptibles d'être reçues, principalement à partir de la station centrale (serveur) du magasin.

### 1) Contenu et traitement des mémoires

### a) prix et coefficients, et calculs associés

L'étiquette dispose de neuf zones mémoires ou registres, à savoir:
- une zone de prix principal (six digits + virgules + symboles monétaires) ;
- quatre zones de prix secondaires (six digits + virgules + symboles monétaires + pictogrammes) ;
- quatre zones de coefficients (six digits de mantisse + un digit d'exposant).

A chaque zone mémoire de prix (principal ou secondaires) est associé :
- une position de virgule parmi trois ;
- un symbole monétaire parmi trois.

A chaque zone mémoire de prix secondaire est associé :
- un ou des pictogrammes (de zéro à quatre pictogrammes) ;
- un coefficient sur six digits + un digit exposant.

La spécialisation de ces mémoires est définie comme suit :
RPP : adresse mémoire 1 : le prix principal
RPS0 : adresse mémoire 2 : le prix secondaire 0
RPS1 : adresse mémoire 3 : le prix secondaire 1
RPS2 : adresse mémoire 4 : le prix secondaire 2
RPS3 : adresse mémoire 5 : le prix secondaire 3
RC0 : adresse mémoire A : coefficient 0 (associable au prix secondaire 0)
RC1 : adresse mémoire B : coefficient 1 (associable au prix secondaire 1)
RC2 : adresse mémoire C : coefficient 2 (associable au prix secondaire 2)
RC3 : adresse mémoire D : coefficient 3 (associable au prix secondaire 3)

Le contenu de la mémoire de prix principal RPP toujours affiché dans la zone de prix principal ZP de l'afficheur.

Les contenus des mémoires de prix secondaires peuvent être affichés cycliquement dans les zones de prix secondaire ZS 1 et ZS2 de l'afficheur, comme on le verra plus loin.

On notera ici que le protocole de communication permet de télécharger directement à partir de la station centrale des contenus vers toutes les mémoires, y compris les mémoires de prix secondaires. Toutefois, comme on le verra en détail plus loin, un tel téléchargement des mémoires de prix secondaires n'a de sens qu'en inhibant préalablement les moyens de multiplication.

Par la suite, dès que les moyens de multiplication sont activés, le calcul de prix secondaire par multiplication du prix principal par un coefficient est effectué, et la mémoire de prix secondaire associée reçoit le résultat de la multiplication.

Les coefficients destinés à être reçus dans les mémoires de coefficients sont téléchargés sous la forme d'un exposant suivi du digit de poids fort de la mantisse, qui doit être non nul.

Lors de la transmission d'un prix, on peut modifier l'état du pavé de promotion PROMO de l'afficheur, en faisant précéder le prix soit d'un digit de valeur A, soit d'un digit de valeur B (les valeurs sont ici notées en format hexadécimal). La valeur A a pour effet d'éteindre le pavé de promotion, tandis que la valeur B a pour effet de faire clignoter ce même pavé.

On peut prévoir par ailleurs que le contenu d'une mémoire de coefficient ne soit pas destiné au calcul de multiplication décrit plus haut. Le format de ce contenu est alors libre.

A ce sujet, pour éviter les éventuelles erreurs de prix qui seraient causées par une multiplication inopinée de la valeur du prix principal par le contenu d'une mémoire de coefficient alors que ce contenu n'est précisément pas un coefficient, la station centrale peut posséder des moyens pour vérifier la plausibilité du résultat de la multiplication, et vérifier en particulier que le résultat de la multiplication est inférieur ou égal à 999999 (dans le cas d'un affichage sur six digits).

On notera ici que la multiplication du prix principal par un coefficient consiste à multiplier entre elles deux données de départ sur six digits chacune, plus l'exposant.

Le résultat complet est donc sur treize digits plus l'exposant et il est arrondi à six digits selon les conventions habituelles et en usage pour l'EURO (à savoir qu'une valeur de 0.4 est arrondie à 0 tandis qu'une valeur de 0,5 est arrondie à 1).

### b) Drapeaux et paramètres

La mémoire de l'étiquette possède par ailleurs un certain nombre d'emplacements pour des drapeaux et paramètres permettant de modifier et d'adapter le fonctionnement de l'étiquette.

Ces drapeaux et paramètres comprennent :
- un drapeau d'état général d'affichage, codé sur quatre bits (quartet) :
   * le bit de poids 0 est une commande d'affichage automatique à réception de prix : lorsque ce bit est à « 1 » à la réception d'un prix principal ou d'un coefficient, les prix secondaires sont recalculés et les prix recalculés sont affichés ; si au contraire ce bit est à « 0 », l'affichage n'est pas altéré, les recalculs ne sont pas effectués et le prix ou coefficient reçu est simplement stockée dans la zone mémoire correspondante.
   * le bit de poids 1 est une commande de clignotement d'affichage : lorsque ce bit est à « 1 », l'afficheur clignote ; sinon l'affichage est fixe.
   * le bit de poids 2 deux est une commande d'affichage cyclique des prix secondaires : lorsque ce bit est à « 1 », les différents prix secondaires sont affichés dans les zones d'affichages secondaires selon un rythme prédéfini.
   * le bit de poids 3 est une commande d'affichage du prix principal, autorisant ou interdisant, selon sa valeur. l'affichage du prix principal.
- des drapeaux d'autorisation de calculs des prix secondaires ;
- des drapeaux d'autorisation d'affichage des prix secondaires en zone d'affichage ZS1 ;
- des drapeaux d'autorisation d'affichage des prix secondaires en zone d'affichage ZS2.
   *(Les drapeaux d'autorisation précités. d'une longueur de quatre bits, sont codés de la façon suivante :*
   * *bit de poids 0 : prix secondaire 0 ;*
   * *bit de poids 1 : prix secondaire 1 ;*
   * *bit de poids 2 : prix secondaire 2 ;*
   * *bit de poids 3 : prix secondaire 3.)*
- un paramètre de cadence d'affichage en zones secondaires, codé sur quatre bits avec par exemple les quatre valeurs suivantes (en décimal) pouvant varier par exemple de moins d'une seconde à plusieurs secondes :
   * 2 : cadence rapide ;
   * 6 : cadence standard ;
   * 9 : cadence lente ;
   * 15 : cadence très lente.
- un paramètre d'état du pavé de promotion, sur un bit (valeur « 1 » : pavé clignotant ; valeur « 0 », pavé éteint).
- un paramètre de temporisation : à certaines commandes (notamment les commandes 8, 9 et C telles qu'on les décrira plus loin) peut être associée une temporisation destinée à limiter la durée pendant laquelle l'action déclenchée par cette commande va persister. Par exemple on peut prévoir que ce soit seulement à l'expiration d'une temporisation associée à une commande de transfert de nouveau prix principal, que l'étiquette recalcule l'ensemble des prix secondaires, puis affiche les nouveaux prix. D'autres commandes à temporisation peuvent être prévues pour permettre l'affichage d'informations de services et de messages volatils contenus dans des zones mémoires spécifiques.

Une autre fonctionnalité liée aux commandes à temporisation peut consister à abréger une temporisation en cours d'exécution, par exemple en transmettant à l'étiquette un message contenant une nouvelle durée de temporisation inférieure à la durée d'origine et éventuellement nulle, ou encore en transmettant à l'étiquette une commande de réaffichage immédiat ou toute instruction appropriée.

Il est important de noter ici que l'étiquette peut être conçue pour que la réception par celle-ci d'un message qui ne lui est pas destiné prolonge la temporisation d'une durée égale à la durée de la réception.

En outre, il est avantageux que la réception par l'étiquette d'une commande qui lui est destinée annule la temporisation.

On peut prévoir par exemple de coder le paramètre de temporisation « tempo » sur quatre bits (seize valeurs hexadécimales), en prévoyant par exemple quatorze durées différentes de temporisation variant entre quelques secondes et 24 heures ou davantage, selon une progression arithmétique, géométrique ou autre.

(On notera que la durée effective de la temporisation sera égale à la valeur fixée par le paramètre « tempo », additionnée de la durée de réception proprement-dite.)

### 2) Commandes

### a) Arborescence logique des commandes

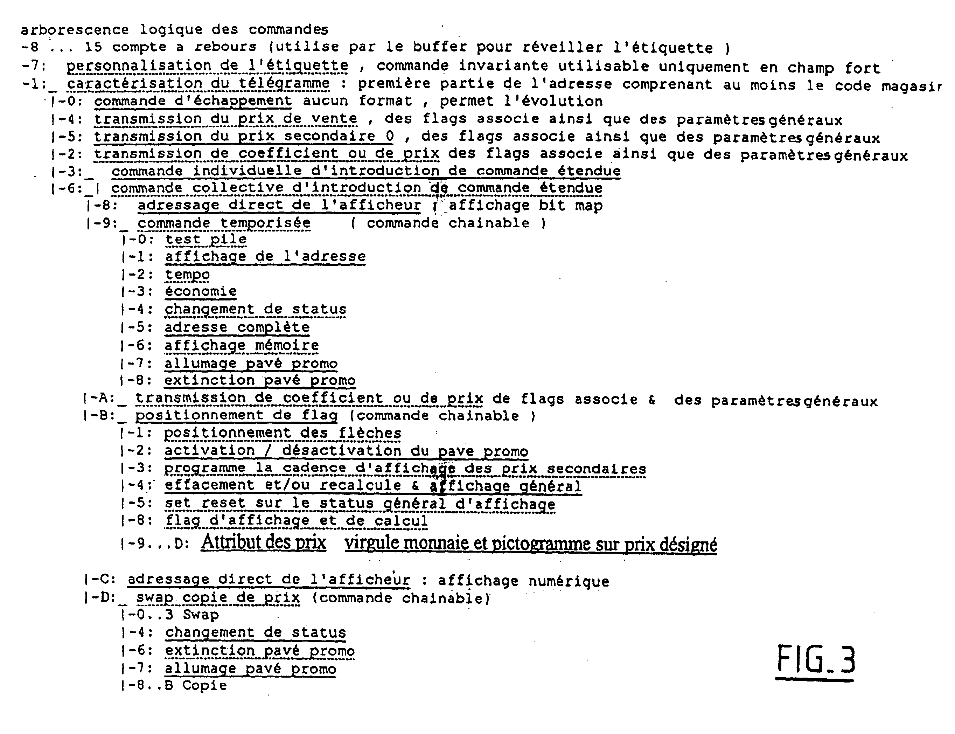

La figure 3 des dessins illustre sous forme de structure arborescente un exemple de jeu de commandes utilisé dans un système d'étiquettes électroniques selon l'invention.

On notera ici qu'il peut exister une redondance entre certaines commandes, et notamment :
- transfert de prix et/ou de coefficients par les commandes 2, 3 et 6 ;
- activation/désactivation du pavé de promotion par les commandes 2, 3, 4, 5 et 6 ;
- transfert de drapeaux et de paramètres généraux par les commandes 2, 3, 4, 5 et 6.

### b) description détaillée des commandes

On va maintenant décrire en détail certaines des commandes illustrées sur la figure 3.

### Commande 7 - personnalisation de l'étiquette

Un notera préliminairement qu'une telle commande ne peut être envoyée qu'en champ fort (communication avec un terminal portable).

Le code hexadécimal de la commande est 7.

Cette commande véhicule deux ensembles de paramètres, à savoir :
- les drapeaux généraux d'affichage (mot de quatre bits, voir plus haut) ;
- un paramètre à N bits, pour déterminer l'état de N flèches de désignation des produits associés à l'étiquette: pour chaque bit, la valeur « O » instruit la flèche correspondante d'être allumée. tandis que la valeur « 1 » instruit son extinction.

En outre, cette commande permet de fixer l'adresse de l'étiquette en écrasant l'adresse précédente. en particulier lorsque l'étiquette doit être associée à un produit différent en rayon. Le format de cette adresse est un mot de treize digits, correspondant par exemple à la valeur du code normalisé EAN 13 du produit associé.

### (Remarque sur l'adressage

*Dans le système selon l'invention, une étiquette peut être adressée en adressage dit « long », ou en adressage dit « court ».*

*En adressage « long ». l'adresse de l'étiquette est constituée par treize digits, par exemple les treize digits du code normalisé EAN13 du produit associé, précédés par trois digits constituant un code magasin, soit au total seize digits.*

*En adressage « court ». l'adresse possède seulement neuf digits constitués, dans l'ordre de poids décroissant, par :*
- *trois digits (de préférence les trois digits du code magasin),*
- *une adresse à six digits. dont les quatre digits de poids faible peuvent être constitués par les quatre digits de poids faible du code EAN13.*

*En mode d'adressage court, ce sont ces six digits qui sont utilisés pour l'adressage individuel des étiquettes.*

*Le passage d'un adressage long à un adressage court s'effectue comme suit: l'adresse transmise à l'étiquette par la commande 7 est une adresse longue, et si l'un au moins des six digits de poids fort de l'adresse à treize digits est supérieur à neuf (hexadécimal), alors l'étiquette se positionne automatiquement dans le mode d'adressage court.)*

On notera également que, lors d'une commande 7, l'étiquette affiche temporairement, par exemple en zone principale, les quatre derniers digits de l'adresse, à des fins de vérification par comparaison avec les quatre derniers digits du code EAN13 figurant sur le produit.

### Commande 1 - caractérisation

Une telle commande tient lieu d'introduction à d'autres commandes, et désigne un groupe d'étiquettes destinées à traiter des commandes à venir.

Une commande 1 contient au minimum le code magasin, auquel cas elle désigne toutes les étiquettes du magasin.

Et elle contient au maximum le code magasin plus les douze premiers digits de l'adresse longue, auquel cas le groupe d'étiquette désigné est constitué de toutes celles dont les douze premiers digits de l'adresse correspondent à ceux figurant dans la commande.

Naturellement, tout nombre de digits d'adresse compris entre 0 et 12 peut être envisagé, pour désigner des groupes plus ou moins importants d'étiquettes.

### Commande 0 - échappement

Il s'agit d'une commande de format indéterminé et totalement libre, contenant l'adresse d'une étiquette. Après réception de cette adresse, l'étiquette ignore la suite de la commande. Il s'agit ici d'une commande réservée pour évolutions futures.

### Commande 4 - envoi du prix principal

Cette commande complète comprend principalement une adresse d'étiquette et un prix principal destiné à celle-ci, constitué par six digits suivis de la position de la virgule et par un code de symbole monétaire.

Cette information de prix peut être suivie optionnellement d'un certain nombre de paramètres et drapeaux d'affichage et de calcul, tels que décrits plus haut :
- suivi de l'état du pavé de promotion ;
- suivi des prix affichés sur la zone d'affichage secondaire ZS1 ;
- suivi des prix calculés ;
- suivi de l'état général d'affichage ;
- suivi des prix affichés sur la zone d'affichage secondaire ZS2.

Toutes les informations précédemment contenues dans la mémoire de l'étiquette et non visées par le contenu d'un message de commande 4 sont préservées. Ainsi par exemple, on peut ne transmettre qu'une partie des digits de prix, de position de virgule et de code de symbole monétaire, les parties non transmises étant inchangées.

### Commande 5 - envoi du prix secondaire 0 (registre RPS0)

Les règles sont les mêmes que pour la commande 4 d'envoi du prix principal, à ceci près que l'information qui suit le prix proprement-dit est un digit indiquant le ou les pictogrammes devant être associés au prix secondaire 0.

Une modification rapide de l'état du pavé de promotion est également possible, la commande pouvant ici être insérée avant le prix lui-même.

### Commande 2 - envoi d'un coefficient ou d'un prix

Les prix ont le format indiqué plus haut (six digits, position de virgule et symbole monétaire).

Les coefficients sont quant à eux des coefficients multiplicateurs sur six digits de mantisse. toujours associés à un exposant.

Par exemple, une valeur d'exposant égale à 8 (hexadécimal) correspond à 10⁰, une valeur 9 correspond à 10¹, etc.. tandis qu'inversement une valeur 7 correspond à 10⁻¹, etc.

La commande contient en outre un digit désignant l'adresse, dans l'étiquette, du prix ou coefficient transmis, à savoir. comme décrit plus haut, une adresse 1 pour le prix principal, une adresse comprise entre 2 et 5 pour l'un des quatre prix secondaires, et une adresse comprise entre A et D pour l'un des quatre coefficients.

Ici encore, les zéros non significatifs ne sont pas obligatoirement transmis.

Comme pour les commandes 4 et 5 décrites plus haut, on peut éventuellement transmettre des drapeaux et paramètres d'affichage et de calcul, ainsi qu'un accès rapide au pavé de promotion.

### Commande 3 - introduction individuelle de commande étendue

Une telle commande contient une adresse individuelle d'étiquette et un code de commande étendue, suivi de paramètres et du corps de la commande elle-même.

Cette commande est réservée pour la mise en oeuvre de fonctions particulières dans une étiquette donnée. par des sous-commandes telles qu'on va les décrire plus loin.

### Commande 6 - introduction collective de commande étendue

Cette commande est dite collective car elle ne comporte pas d'adresse individuelle, le groupe d'étiquettes concerné étant alors un groupe d'étiquettes désigné par un message de caractérisation (commande 1) émis préalablement.

Le premier digit de la commande est le digit « 6 », et est suivi d'un code de la commande étendue. lui-même suivi par des paramètres constituant le corps de cette commande étendue.

La commande 6 permet la mise en oeuvre de certaines fonctionnalités par un groupe donné d'étiquettes.

Les différentes commandes étendues pouvant être incluses dans les commandes 3 et 6 vont maintenant être décrites.

### Commande 8 - adressage direct de l'afficheur (carte de bits)

Chaque symbole d'affichage est constitué de sept segments, dont certaines combinaisons peuvent définir des lettres ou des symboles autres que ceux normalement affichés par l'intermédiaire d'un codeur sept segments traditionnel.

Dans le présent exemple, on affecte aux sept segments respectivement sept paires de valeurs hexadécimales. respectivement 02, 04, 08, 10, 20, 40, 80, telles qu'illustrées sur la figure 4 des dessins.

A chaque combinaison de segments « allumés » susceptible de former une lettre ou un symbole correspond une somme unique des valeurs affectées à ces segments, et réciproquement, comme illustré dans le tableau suivant donné à titre d'exemple (les calculs sont effectués en mode hexadécimal) :

| lettre ou symbole | somme |
|---|---|
| 1 | 40+20 = 60 |
| t | 10+8+4+2 = 1E |
| - | 02 = 02 |
| H | 40+20+8+4+2 = 6E |
| F | 80+8+4+2 = 8E |
| y | 40+20+10+4+2 = 76 |
| L | 10+8+4 = 1C |
| U | 40+20+10+8+4 = 7C |
| J | 40+20+10 = 70 |

La commande 8 contient un ensemble de valeurs de somme désignant les symboles recherchés pour les N digits de l'afficheur, ainsi qu'un digit de temporisation représentatif de la durée pendant laquelle ces symboles vont être affichés, avec des valeurs pouvant varier par sauts entre par exemple quelques secondes et plusieurs dizaines d'heures (voir plus haut).

Elle contient également un certain nombre de digits et/ou de bits constituant des paramètres d'affichage, et par exemple
* un digit :
   - dont les deux bits de poids faible désignent la zone ZP, ZS1 ou ZS2 de l'afficheur qui doit afficher les symboles reçus ;
   - dont le bit de poids immédiatement supérieur indique si les symboles et/ou pictogrammes couramment affichés dans la zone désignée doivent être effacés ou non lors de l'affichage des symboles ;
   - dont enfin le bit de poids le plus élevé indique si l'étiquette doit au préalable effacer l'ensemble de la zone d'affichage désignée.
* un autre digit qui désigne l'endroit, dans la zone d'affichage désignée, où doit commencer l'affichage des symboles, avec par exemple la convention suivante :
   0 : au premier digit (le plus à gauche)
   2 : au deuxième digit
   4 : au troisième digit
   6 : au quatrième digit
   8 : au cinquième digit
   A : au sixième digit.

Avantageusement. seuls les symboles effectivement affichables compte-tenu de la valeur de ce dernier digit sont transmis dans un message de commande 8.

### Commande C - adressage direct codé de l'afficheur

Cette commande. destinée à provoquer l'affichage de certains signes alphanumériques ou autres sur les afficheurs, est identique à la commande 8, à l'exception du fait que les données transmises sont numériques et non sous forme de carte de segments comme décrit ci-dessus. Ainsi un quartet peut permettre d'afficher des chiffres, lettres et symboles par exemple selon le tableau suivant :

| Valeur | Affichage |
|---|---|
| 0 | « 0 » ou « O » |
| 1 | « 1 » ou « I » |
| 2 | «2» |
| 3 | « 3 » |
| 4 | « 4 » |
| 5 | « 5 » ou « S » |
| 6 | « 6 » ou « G » |
| 7 | « 7 » |
| 8 | « 8 » |
| 9 | «9» |
| A | vide |
| B | « F » |
| C | « = » |
| D | «t» |
| E | «U» |
| F | « C » |

### Commande A - transmission de coefficients ou de prix, des drapeaux associés ainsi que des paramètres généraux

Cette commande est similaire à la commande 2, dont elle reprend les fonctionnalités et le format.

Son intérêt est de pouvoir être associée à la commande 6 et ainsi de s'adresser à des groupes donnés d'étiquettes, voire à toutes les étiquettes d'un même magasin.

Dans le cas de la transmission d'un prix, une commande rapide du pavé de promotion est ici encore possible, comme décrit plus haut.

### Commande D - permutation ou copie de prix

Cette commande est constituée de blocs de trois digits, qui peuvent être accolés pour constituer une macro- commande.

Elle contient, à la suite du code D de la commande, des successions de digits constituant les blocs de commandes.

Le premier digit de chaque bloc indique, par son bit de poids fort, si un prix doit être copié ou permuté. Les trois bits de poids faibles indiquent quant à eux le nombre de digits de prix concernés par cette copie ou permutation.

Par exemple, une valeur 0 pour ces trois bits (000) indique que les 6 premiers digits sont concernés, tandis que les valeurs 1, 2 et 3 (respectivement 001, 010 et 011) correspondent respectivement à 7. 8 et 9 digits.

On peut en outre prévoir un certain nombre d'exceptions à ce qui précède.
* première exception (si le premier digit de chaque bloc vaut 4, c'est-à-dire 0100) : ceci permet de modifier les drapeaux d'affichage et de calcul, cette valeur 4 introduisant une sous-commande choisie par exemple parmi les sous-commandes suivantes :
   - suivi des prix affichés sur l'afficheur secondaire ZS1 ;
   - suivi des prix calculés :
   - suivi de l'état général de l'affichage ;
   - suivi des prix affichés sur l'afficheur secondaire ZS2 ;
* deuxième exception (si le premier digit de chaque bloc vaut 6, soit 0110) : ceci provoque, grâce à une commande à un seul digit. l'extinction du pavé de promotion ;
* troisième exception (si le premier digit de chaque bloc vaut 7, soit 0111) : ceci provoque. toujours grâce à une commande à un seul digit, l'allumage du pavé de promotion.

Le second digit désigne d'un bloc la source de la copie ou de la permutation, tandis que le troisième digit désigne la destination de la copie ou de la permutation, les valeurs de ces digits (en hexadécimal) étant les adresses des mémoires telles que décrites plus haut, de 1 à 5 pour les prix et de A à D pour les coefficients.

Par exemple, le bloc de valeur 01A désigne une permutation entre la valeur contenue dans le registre du prix principal et la valeur de la mantisse dans le registre du coefficient 0, tandis que le bloc de valeur 814 désigne une copie du contenu du registre de prix principal vers le registre du prix secondaire 2.

### Commande B - positionnement de drapeau

Cette commande est chaînable, en ce sens qu'elle peut être constituée d'une succession de blocs de commande. Ces blocs peuvent ici encore être accolés pour constituer une macro-commande.

Les digits qui suivent le code B de la commande constituent les blocs de commandes dont le premier digit indique la sous-commande à exécuter et dont le ou les digits suivants désignent les modalités de l'exécution. Les valeurs de sous-commandes possibles sont dans le présent exemple les suivantes :
- 1 : transmission d'une commande de positionnement des flèches (voir plus haut à propos des drapeaux et paramètres) ;
- 2 : transmission d'une commande de pavé de promotion (clignotant ou éteint) ;
- 3 : transmission d'une commande de cadence d'affichage des prix secondaires (voir plus haut) ;
- 4 : transmission d'une commande d'effacement de l'afficheur et/ou de calcul et réaffichage général (voir plus haut) ;
- 5 : commande d'établissement/rétablissement de l'état général : le digit suivant (deuxième digit) est utilisé pour réaliser une fonction logique « ET » avec le digit d'état (rétablissement de drapeau), tandis que le troisième digit est utilisé pour réaliser une fonction logique « OU » avec ce même digit d'état (établissement de drapeau).

On rappellera ici les valeurs de ces drapeaux :
bit 0 : affichage automatique à réception de commande ;
bit 1 : clignotement de l'afficheur
bit 2 : activation de l'affichage cyclique des prix secondaires ;
bit 3 : activation de l'affichage du prix principal.

On observera ici qu'une réinitialisation des drapeaux aboutit à un digit égal à 1101, soit D en hexadécimal.
- 8 : commande de modification des drapeaux d'affichage et de calcul : le deuxième digit du bloc désigne la sous-commande à exécuter, et en particulier :
- le suivi des prix affichés sur l'afficheur secondaire ZS1 ;
- le suivi des prix calculés ;
- le suivi de l'état général de l'affichage ;
- le suivi des prix affichés sur l'afficheur secondaire ZS2.
- 9 : commande de modification des attributs du prix principal : le code 9 de la sous-commande est suivi par un digit représentant le nombre de chiffres après la virgule et le symbole monétaire associé au prix principal, ou encore par un digit de commande du pavé de promotion.
- A, B, C et D : commandes de modification des attributs des prix secondaires 0, 1, 2 et 3 respectivement : ces sous-commandes sont analogues à la sous-commande 9, à ceci près que la commande du pavé de promotion est remplacée par la commande du ou des pictogrammes associés au prix secondaire considéré.

A propos du format des drapeaux de position de virgule et de pictogramme(s) associé(s). on peut par exemple adopter la convention suivante : les deux bits de poids faible du quartet indiquent le nombre de chiffres après la virgule dans l'affichage (quatre valeurs possibles, de zéro à trois chiffres après la virgule) ; les deux bits de poids fort de ce même quartet codent le symbole monétaire à utiliser, avec par exemple la convention suivante :
- 00 : pas de symbole monétaire ;
- 01 : premier symbole monétaire (par exemple la devise locale) ;
- 10 : second symbole monétaire ;
- 11 : troisième symbole monétaire.

On observera ici qu'il s'agit uniquement de règles d'affichage, l'étiquette ne travaillant que sur des nombres entiers « anonymes ». On notera également que les symboles monétaires peuvent être très divers en fonction du pays où le système est exploité (devise locale principale, devise locale secondaire, « Euro », et toutes autres devises utiles).

Les pictogrammes associés aux prix secondaires sont codés dans les quatre bits du digit suivant, qui permettent ainsi de sélectivement allumer ou éteindre quatre pictogrammes différents.

### Commande 9 - commande temporisée

Cette commande est chaînable, avec dans le présent exemple neuf types possibles de commandes temporisées dans le format suivant : le premier digit désigne dans tous les cas la durée de la temporisation comme dans le cas de la commande 8 (voir plus haut).

Dans l'étiquette, le traitement d'une commande 9 consiste à exécuter la commande, puis à lancer la temporisation sur la durée désignée par le premier digit. A l'échéance de la temporisation. l'affichage cyclique des prix secondaires est activé, tandis que les commandes de calcul des prix secondaires et d'affichage du prix principal sont exécutées pour autant que les paramètres d'autorisation (voir plus haut) le permettent.

En outre, indépendamment de la valeur du drapeau concerné, l'étiquette affiche automatiquement les données reçues à réception.

On observera ici que, pendant la temporisation, l'étiquette reste apte à recevoir d'éventuelles autres commandes, qu'elles soient transmises par la station centrale (champ faible) ou par un terminal portable (champ fort).

Une commande 9 est organisée en sous-blocs de tailles variables. Le premier digit de chaque sous-bloc indique l'action à effectuer, tandis que son second digit indique le cas échéant la zone de l'afficheur concernée, avec la convention suivante :
- 1 : zone principale
- 2 : zone de premier prix secondaire
- 3 : zone de second prix secondaire.

Par ailleurs. le troisième digit du sous-bloc indique le cas échéant la zone de mémoire dont le contenu doit être affiché. en utilisant de préférence les conventions décrites plus haut, à savoir de 1 à 5 pour l'affichage de l'un des cinq prix et de A à D pour l'affichage de l'un des quatre coefficients.

Les neuf types de sous-commandes d'une commande temporisée sont les suivants :
- 0 : test de la pile de l'étiquette (commande sur 2 digits) : le résultat est l'affichage de « YES » sur l'afficheur désigné, pendant la durée de la temporisation, si l'étiquette a vérifié que la pile était encore convenablement chargée. Si la pile est usée, c'est l'information « bAtt » qui est affichée. Les affichages « YES » et « bAtt » peuvent être clignotants : on notera que ce test de pile permet également de tester le bon fonctionnement du circuit de réception et des autres circuits de l'étiquette : ainsi, si une telle sous-commande ne provoque pas le comportement ci-dessus, alors l'observateur sait que l'étiquette est défectueuse.
- 1 : affichage de l'adresse de l'étiquette (commande sur 2 digits) : cette commande provoquer l'affichage, sur l'afficheur désigné et pendant la durée fixée par la temporisation, des quatre derniers digits de l'adresse (identiques par exemple aux quatre derniers digits du code produit EAN13). Ces quatre digits sont de préférence suivis des signes « -C ». pour indiquer qu'il s'agit d'un Code-produit.
- 2 : simple lancement de la temporisation définie (commande à 1 digit) : cette commande n'a pas d'effet aussi longtemps que dure la temporisation ; simplement, à l'échéance de celle-ci, l'affichage est rafraîchi ou mis à jour (comme pour les autres commandes temporisées). Ceci permet de choisir le moment où des modifications de prix préalablement chargées dans une étiquette vont effectivement apparaître sur l'afficheur.
- 3 : économie d'énergie (commande à 1 digit. non chaînable) : cette commande permet d'éteindre l'afficheur pendant toute la durée de la temporisation, notamment pour économiser la pile.
- 4 : changement de l'état d'affichage et lancement de la temporisation (commande à 5 digits) : le premier digit contient le code de commande 4 ; le deuxième digit désigne le prix qui doit être affiché dans la zone secondaire ZS1 ; le troisième digit désigne le prix calculé ; le quatrième digit permet de modifier l'état d'affichage, selon les règles définies plus haut ; enfin le cinquième digit désigne le prix qui doit être affiché dans la zone secondaire ZS2.
- 5 : fonction d'affichage défilant de l'adresse de l'étiquette (commande à 1 digit, non chaînable) : les quatre dernier digits de l'adresse sont affichés dans la zone principale ZP de l'afficheur, tandis que sur l'afficheur secondaire ZS1 sont affichés, avec balayage horizontal de gauche à droite. les treize digits de l'adresse individuelle de l'étiquette (hors code magasin).
   On notera ici que, dans le cas d'une commande 5, le digit normalement utilisé pour la temporisation indique avantageusement le nombre de pas de balayage horizontal à effectuer.
- 6 : affichage du contenu de la mémoire (commande à 3 digits) : les deux bits de poids faible du deuxième digit désignent l'afficheur concerné, et le troisième digit désigne la zone mémoire dont le contenu est à afficher.
   On notera ici que, de façon avantageuse, le bit qui précède immédiatement ces deux bits de poids faible peut être utilisé pour sélectivement effacer ou non la virgule, le symbole monétaire et le ou les pictogrammes associées à l'afficheur concerné.
- 7 : commande du clignotement du pavé de promotion (commande à un seul digit) : la commande est exécutée dès réception et, selon une particularité de cette commande, le clignotement se poursuivra à l'expiration de la temporisation.
- 8 : commande de l'arrêt du clignotement du pavé de promotion (commande à un seul digit) : ici encore, l'extinction du pavé de promotion est effectuée dès réception, et celui-ci reste éteint même après expiration de la temporisation.

On va maintenant donner un certain nombre de possibilités d'utilisation concrète du système décrit ci-dessus :
i) d'une manière extrêmement souple notamment en fonction des demandes de l'utilisateur ou du temps, une étiquette peut afficher des prix très divers tels que prix actuel, prix promotionnel, ancien prix (en particulier pendant que le prix promotionnel est en vigueur), prix au litre ou au kilo, prix dans une ou plusieurs autres devises (notamment en « Euro » pour les pays adhérant à la monnaie européenne unique), etc.
ii) Lorsqu'un nouveau prix principal est envoyé à une étiquette, celle-ci peut recalculer et réafficher automatiquement des prix secondaires tels que le prix en Euro ou autre devise et le prix au litre ou au kilo.
iii) On peut effectuer dans toutes les étiquettes une mémorisation préalable d'un prix promotionnel, ou autre nouveau prix, et par une simple commande collective de mise à jour de l'affichage au niveau d'un groupe d'étiquettes ou de toutes les étiquettes du magasin, c'est-à-dire en un temps extrêmement bref, on peut faire basculer celles-ci sur les nouveaux prix.
iv) De la même manière. le basculement des prix lors d'un changement de devise, tel que le basculement légal entre prix en devise nationale et prix en Euro, peut être préparé à l'avance et être effectué très rapidement.
v) On peut provoquer à partir de la station centrale l'affichage de données de gestion (quantités en stock. nombre de « facings », unité consommateur, unité de réapprovisionnement, etc.), avec le cas échéant une temporisation permettant d'assurer que l'étiquette reprendra son état d'origine au bout d'une durée déterminée.
vi) L'affichage des quatre derniers chiffres de l'adresse d'étiquette (code EAN13) permet de vérifier la bonne affectation de l'étiquette au produit, ici encore avec une temporisation le cas échéant.
vii) Des tests, notamment le test d'état de la pile, peuvent être effectués, et les résultats des tests affichés sur l'afficheur, tout en étant assuré grâce à la temporisation que l'étiquette reprendra son état d'origine.

Bien entendu. la présente invention n'est nullement limitée à la forme décrite ci-dessus et représentée sur les dessins, mais l'homme du métier saura y apporter de nombreuses variantes ou modifications.

On notera à cet égard que, bien que l'on ait décrit ci-dessus en détail le contenu essentiel des différentes commandes, celles-ci pourront inclure, pour faciliter leur interprétation et assurer la fiabilité du traitement, différents séparateurs de longueurs différentes, ainsi que des bits ou digits permettant la mise en oeuvre de fonctions de vérification d'erreurs de type « somme de contrôle » ou autre.

## Revendications

1. Système d'étiquettes électroniques notamment pour affichage des prix dans les magasins, comprenant une station centrale et une pluralité d'étiquettes électroniques réparties, ainsi que des moyens de communication pour transmettre des informations de prix de la station centrale vers les étiquettes, chaque étiquette comprenant un jeu de registres de prix (RPP, RPSn) et un jeu de registres de coefficients (RCn), et chaque étiquette possédant un afficheur (ACL) comportant au moins deux zones d'affichage de prix (ZP, ZSn), **caractérisé en ce que** les informations transmises de la station centrale à une étiquette comprennent des instructions d'affectation (Commande n) entre d'une part un prix calculé égal au prix contenu dans l'un des registres de prix multiplié par un coefficient contenu dans l'un des registres de coefficients, et d'autre part une zone d'affichage de prix donnée.

2. Système selon la revendication 1, **caractérisé en ce que** le jeu de registres de prix comprend un registre de prix principal (RPP) et un ou plusieurs registres de prix secondaires (RPSn) aptes à contenir chacun une valeur égale à la multiplication du prix principal par un coefficient donné contenu dans un registre de coefficient (RCn).

3. Système selon la revendication 2, **caractérisé en ce qu'**il comprend une zone principale (ZP) d'affichage de prix et une ou plusieurs zones secondaires (ZSn) d'affichage de prix.

4. Système selon la revendication 3, **caractérisé en ce qu'**il comprend une première pluralité de registres de prix secondaires (RPSn) et une seconde pluralité de zones secondaires d'affichage (ZSn), et **en ce que** les instructions d'affectation sont aptes à effectuer un choix parmi un ensemble prédéfini d'affectations entre des registres de prix et des zones d'affichage.

5. Système selon la revendication 4, **caractérisé en ce que** les zones secondaires d'affichage (ZSn) sont en nombre inférieur aux registres de prix secondaires (RPSn) .

6. Système selon l'une des revendications 1 à 5, **caractérisé en ce qu'**à chaque registre de prix (RPP, RPSn) est associé un registre d'attributs de prix, les contenus des deux registres pouvant être modifiés indépendamment l'un de l'autre.

7. Système selon l'une des revendications 1 à 6, **caractérisé en ce que** les informations transmises de la station centrale à une étiquette comprennent en outre des messages de transfert de prix à destination d'un registre de prix déterminé.

8. Système selon la revendication 7, **caractérisé en ce que** chaque instruction de transfert de prix est apte à contenir également au moins un paramètre de calcul ou d'affichage.

9. Système selon l'une des revendications 1 à 8, **caractérisé en ce que** les informations transmises de la station centrale à une étiquette comprennent en outre des messages de transfert de coefficients à destination d'un registre de coefficient déterminé.

10. Système selon l'une des revendications 1 à 9, **caractérisé en ce que** les informations transmises de la station centrale à une étiquette comprennent en outre des instructions d'adressage direct des segments formant les caractères des zones d'affichage de prix, afin d'afficher des informations quelconques comprenant des signes alphanumériques et autres.

11. Système selon la revendication 10, **caractérisé en ce qu'**à chaque segment d'un caractère est affectée une valeur numérique (Fig. 4), les valeurs numériques affectées aux différents segments étant telles qu'il existe une relation biunivoque entre une somme desdites valeurs et les valeurs participant à cette somme et désignant les segments à afficher, et **en ce que** les instructions d'adressage direct des segments comprennent des sommes respectivement associées à chaque caractère.

12. Système selon l'une des revendications 1 à 11, **caractérisé en ce que** les informations transmises de la station centrale à une étiquette comprennent en outre des instructions de permutation entre les contenus de deux registres de prix ou de deux registres de coefficients.

13. Système selon l'une des revendications 1 à 12, **caractérisé en ce que** les informations transmises de la station centrale à une étiquette comprennent en outre des instructions de copie du contenu d'un registre de prix ou de coefficient vers un autre registre de prix ou de coefficient.

14. Système selon l'une des revendications 12 et 13, **caractérisé en ce que** les instructions de permutation et de copie sont constituées par une instruction unique contenant un code de commande, deux adresses de registres et un paramètre indiquant s'il s'agit d'une permutation ou d'une copie.

15. Système selon l'une des revendications 1 à 14, **caractérisé en ce que** les informations transmises de la station centrale à une étiquette comprennent, en outre, des instructions aptes à contenir une donnée de temporisation à partir de laquelle l'étiquette détermine un paramètre temporel relatif à l'affichage d'une information.

16. Système selon la revendication 15, **caractérisé en ce que** lesdites instructions comprennent des instructions d'affectation d'un ensemble déterminé de registres de prix à des zones d'affichage.

17. Système selon la revendication 16, **caractérisé en ce que** ledit paramètre temporel est une durée pendant laquelle l'affectation doit être assurée.

18. Système selon la revendication 16, **caractérisé en ce que** ledit paramètre temporel est un instant retardé à partir duquel l'affectation doit être assurée.

19. Système selon l'une des revendications 15 à 18, **caractérisé en ce que** chaque étiquette comporte des moyens de vérification de l'état d'une batterie d'alimentation de celle-ci, et **en ce que** l'information affichée est un indicateur d'état de batterie.

20. Système selon l'une des revendications 15 à 19, **caractérisé en ce que** l'information affichée comprend une adresse de l'étiquette.

21. Système selon l'une des revendications précédentes, **caractérisé en ce qu'**il comprend des moyens pour sélectivement charger dans une mémoire d'adresse d'une étiquette électronique une adresse longue ou une adresse courte.

22. Système selon la revendication 21, **caractérisé en ce que** l'adresse longue est constituée au moins en partie par les caractères d'un code-produit normalisé d'un produit associé à l'étiquette, et **en ce que** l'adresse courte est constituée au moins en partie par une portion déterminée des caractères dudit code-produit et par un ensemble d'autres caractères.

## Patentansprüche

1. System von elektronischen Etiketten, insbesondere zur Anzeige der Preise in Geschäften, das eine Zentralstation und eine Vielzahl verteilter elektronischer Etiketten umfaßt, sowie Kommunikationsmittel zur Übertragung der Preisinformationen von der Zentralstation zu den Etiketten, wobei jedes Etikett einen Preisregistersatz (RPP, RPSn) und einen Koeffizientenregistersatz (RCn) umfaßt und wobei jedes Etikett eine Anzeige (ACL) aufweist, die mindestens zwei Preisanzeigefelder (ZP, ZSn) umfaßt, **dadurch gekennzeichnet, daß** die Informationen, die von der Zentralstation an ein Etikett übertragen werden, Zuordnungsanweisungen (Befehl n) umfassen zwischen einerseits einem Preis, der berechnet wird als der Preis, der in einem der Preisregister enthalten ist, multipliziert mit einem in einem der Koeffizientenregister enthaltenen Koeffizienten, und andererseits einem gegebenen Preisanzeigefeld.

2. System nach Anspruch 1, **dadurch gekennzeichnet, daß** der Preisregistersatz ein Hauptpreisregister (RPP) und ein oder mehrere Nebenpreisregister (RPSn) umfaßt, von denen jedes einen Wert enthalten kann, der gleich der Multiplikation des Hauptpreises mit einem gegebenen, in einem Koeffizientenregister (RCn) enthaltenen Koeffizienten ist.

3. System nach Anspruch 2, **dadurch gekennzeichnet, daß** es ein Hauptpreisanzeigefeld (ZP) und ein oder mehrere Nebenpreisanzeigefelder (ZSn) umfaßt.

4. System nach Anspruch 3, **dadurch gekennzeichnet, daß** es eine erste Vielzahl von Nebenpreisregistem (RPSn) und eine zweite Vielzahl von Nebenanzeigefeldern (ZSn) umfaßt, sowie dadurch, daß die Zuordnungsanweisungen geeignet sind, eine Wahl unter einer vorbestimmten Menge an Zuordnungen zwischen Preisregistern und Anzeigefeldern zu treffen.

5. System nach Anspruch 4, **dadurch gekennzeichnet, daß** die Nebenanzeigefelder (ZSn) zahlenmäßig geringer sind als die Nebenpreisregister (RPSn).

6. System nach einem der Ansprüche 1 bis 5, **dadurch gekennzeichnet, daß** jedem Preisregister (RPP, RPSn) ein Preisattributregister zugeordnet ist, wobei die Inhalte der beiden Register unabhängig voneinander verändert werden können.

7. System nach einem der Ansprüche 1 bis 6, **dadurch gekennzeichnet, daß** die Informationen, die von der Zentralstation an ein Etikett übertragen werden, außerdem Preisübertragungsmitteilungen umfassen, die an ein bestimmtes Preisregister gerichtet sind.

8. System nach Anspruch 7, **dadurch gekennzeichnet, daß** jede Preisübertragungsanweisung geeignet ist, zudem wenigstens einen Berechnungs- oder Anzeigeparameter zu beinhalten.

9. System nach einem der Ansprüche 1 bis 8, **dadurch gekennzeichnet, daß** die Informationen, die von der Zentralstation an ein Etikett übertragen werden, außerdem Koeffizientenübertragungsmitteilungen umfassen, die an ein bestimmtes Koeffizientenregister gerichtet sind.

10. System nach einem der Ansprüche 1 bis 9, **dadurch gekennzeichnet, daß** die Informationen, die von der Zentralstation an ein Etikett übertragen werden, außerdem Anweisungen zur Direktadressierung der Segmente, welche die Zeichen der Preisanzeigefelder bilden, umfassen, um beliebige Informationen anzuzeigen, die alphanumerische und andere Symbole umfassen.

11. System nach Anspruch 10, **dadurch gekennzeichnet, daß** jedem Segment eines Zeichens ein numerischer Wert zugeordnet ist (Fig. 4), wobei die den unterschiedlichen Segmenten zugeordneten numerischen Werte derart sind, daß eine eineindeutige Beziehung besteht zwischen einer Summe dieser Werte und den Werten, die an dieser Summe beteiligt sind und die anzuzeigenden Segmente bestimmen, sowie dadurch, daß die Anweisungen zur Direktadressierung der Segmente Summen umfassen, die mit dem jeweiligen Zeichen verknüpft sind.

12. System nach einem der Ansprüche 1 bis 11, **dadurch gekennzeichnet, daß** die Informationen, die von der Zentralstation an ein Etikett übertragen werden, außerdem Anweisungen zum Permutieren der Inhalte zweier Preisregister oder zweier Koeffizientenregister umfassen.

13. System nach einem der Ansprüche 1 bis 12, **dadurch gekennzeichnet, daß** die Informationen, die von der Zentralstation an ein Etikett übertragen werden, außerdem Anweisungen zur Kopie des Inhalts eines Preisoder Koeffizientenregisters in ein anderes Preis- oder Koeffizientenregister umfassen.

14. System nach einem der Ansprüche 12 und 13, **dadurch gekennzeichnet, daß** die Permutierungs- und Kopieranweisungen aus einer einzigen Anweisung bestehen, die einen Steuercode, zwei Registeradressen und einen Parameter umfaßt, der anzeigt, ob es sich um eine Permutation oder eine Kopie handelt.

15. System nach einem der Ansprüche 1 bis 14, **dadurch gekennzeichnet, daß** die Informationen, die von der zentralen Kontrollstation an ein Etikett übertragen werden, außerdem Anweisungen umfassen, die ausgelegt sind um Verzögerungsdaten zu beinhalten, ausgehend von denen das Etikett einen die Anzeige einer Information betreffenden Zeitparameter bestimmt.

16. System nach Anspruch 15, **dadurch gekennzeichnet, daß** die Anweisungen Anweisungen zur Zuordnung einer bestimmten Menge von Preisregistern an Anzeigefelder umfassen.

17. System nach Anspruch 16, **dadurch gekennzeichnet, daß** der Zeitparameter eine Dauer ist, während der die Zuordnung gewährleistet werden soll.

18. System nach Anspruch 16, **dadurch gekennzeichnet, daß** der Zeitparameter ein retardierter Zeitpunkt ist, von dem an die Zuordnung gewährleistet werden soll.

19. System nach einem der Ansprüche 15 bis 18, **dadurch gekennzeichnet, daß** jedes Etikett Mittel zur Überprüfung des Zustands einer Batterie umfaßt, von welcher es versorgt wird, sowie dadurch, daß die angezeigte Information eine Anzeige des Zustands der Batterie ist.

20. System nach einem der Ansprüche 15 bis 19, **dadurch gekennzeichnet, daß** die angezeigte Information eine Adresse des Etiketts umfaßt.

21. System nach einem der vorstehenden Ansprüche, **dadurch gekennzeichnet, daß** es Mittel umfaßt, um wahlweise eine lange Adresse oder eine kurze Adresse in einen Adressenspeicher eines elektronischen Etiketts zu laden.

22. System nach Anspruch 21, **dadurch gekennzeichnet, daß** die lange Adresse wenigstens teilweise aus den Zeichen eines genormten Produktcodes eines zu dem Etikett gehörenden Produktes gebildet ist, sowie darin, daß die kurze Adresse wenigstens teilweise aus einem bestimmten Anteil der Zeichen dieses Produktcodes und aus einer Gruppe anderer Zeichen gebildet ist.

## Claims

1. An electronic label system, in particular for displaying prices in stores, the system comprising a central station and a plurality of distributed electronic labels, together with communication means for sending price information from the central station to the labels, each label including a set of price registers (RPP, RPSn), a set of coefficient registers (RCn), and a display (ACL) including at least two price display areas (ZP, ZSn), the system being **characterized in that** the information sent from the central station to a label includes assignment instructions (Command n) linking a given price display area with a calculated price equal to the price contained in one of the price registers multiplied by a coefficient contained in one of the coefficient registers.

2. A system according to claim 1, **characterized in that** the set of price registers comprises a main price register (RPP) and one or more secondary price registers (RPSn) each adapted to contain a value equal to the main price multiplied by a coefficient contained in a coefficient register (RCn).

3. A system according to claim 2, **characterized in that** it includes a main price display area (ZP) and one or more secondary price display areas (ZSn).

4. A system according to claim 3, **characterized in that** it includes a plurality of secondary price registers (RPSn) and a plurality of secondary display areas (ZSn), and the assignment instructions are adapted to make a choice from a predetermined set of assignments linking price registers and display areas.

5. A system according to claim 4, **characterized in that** the number of secondary display areas (ZSn) is less than the number of secondary price registers (RPSn).

6. A system according to any one of claims 1 to 5, **characterized in that** each price register (RPP, RPSn) is associated with a price attributes register and the contents of the two registers can be modified independently of each other.

7. A system according to any one of claims 1 to 6, **characterized in that** the information sent from the central station to a label further includes price transfer messages for a particular price register.

8. A system according to claim 7, **characterized in that** each price transfer instruction is also able to contain a calculation or display parameter.

9. A system according to any one of claims 1 to 8, **characterized in that** the information sent from the central station to a label further includes coefficient transfer messages for a particular coefficient register.

10. A system according to any one of claims 1 to 9, **characterized in that** the information sent from the central station to a label further includes instructions for directly addressing segments of the price display areas forming characters in order to display information comprising alphanumeric and other signs.

11. A system according to claim 10, **characterized in that** each segment of a character is assigned a numerical value (Figure 4), the numerical values assigned to the various segments are such that there is a one-to-one relationship between a sum of said values and the values contributing to that sum and designating the segments to be displayed, and the instructions for directly addressing the segments include a respective sum associated with each character.

12. A system according to any one of claims 1 to 11, **characterized in that** the information sent from the central station to a label further includes instructions for permutating the contents of two price registers or two coefficient registers.

13. A system according to any one of claims 1 to 12, **characterized in that** the information sent from the central station to a label further includes instructions for copying the content of a price or coefficient register to another price or coefficient register.

14. A system according to claim 12 or claim 13, **characterized in that** the permutation and copying instructions consist of a single instruction containing a command code, two register addresses and a parameter indicating permutation or copying.

15. A system according to any one of claims 1 to 14, **characterized in that** the information sent from the central station to a label further includes instructions adapted to contain time-delay data from which the label determines a timing parameter relating to said assignment of information.

16. A system according to claim 15, **characterized in that** said instructions include instructions for assigning a particular set of price registers to display areas.

17. A system according to claim 16, **characterized in that** said timing parameter is a duration for which the assignment must be applied.

18. A system according to claim 16, **characterized in that** said timing parameter is a delayed time from which the assignment must be applied.

19. A system according to any one of claims 15 to 18, **characterized in that** each label includes means for verifying the status of a power supply battery of the label and said displayed information is a battery status indicator.

20. A system according to any one of claims 15 to 19, **characterized in that** the displayed information includes an address of the label.

21. A system according to any preceding claim, **characterized in that** it includes means for selectively loading a long address or a short address into an address memory of an electronic label.

22. A system according to claim 21, **characterized in that** the long address consists at least in part of the characters of a standardized product code of a product associated with the label and the short address consists at least in part of a particular portion of the characters of said product code and other characters.
